## Europäisches Patentamt

## European Patent Office

## Office européen des brevets

(11) Publication number: **0 000 803**
**B1**

(12) **EUROPEAN PATENT SPECIFICATION**

(45) Date of publication of patent specification: **02.06.82**

(51) Int. Cl.³: **F 24 J 3/02**

(21) Application number: **78200131.7**

(22) Date of filing: **04.08.78**

(54) Solar energy system.

(30) Priority: **05.08.77 NL 7708724**

(43) Date of publication of application:
**21.02.79 Bulletin 79/4**

(45) Publication of the grant of the patent:
**02.06.82 Bulletin 82/22**

(84) Designated Contracting States:
**BE CH DE FR GB NL SE**

(56) References cited:
**DE - A - 2 542 348**
**DE - A - 2 624 677**
**FR - A - 2 313 644**
**US - A - 2 838 043**
**US - A - 3 986 489**

(73) Proprietor: **Eurometaal N.V.**
**Hemkade**
**NL-1506 PR Zaandam (NL)**

(72) Inventor: **Baardman, Maarten**
**Hoogstuk 48**
**Druten (NL)**

(74) Representative: **Cammel, Willem Frans et al,**
**OCTROOIBUREAU ARNOLD & SIEDSMA No. 1,**
**Sweelinckplein**
**NL-2517 GK The Hague (NL)**

Courier Press, Leamington Spa, England.

### Solar energy system

The invention relates to a solar energy system comprising a closed fluid circuit, a solar energy collector forming part of the circuit, at least one temperature sensor which is connected with control means and is provided in the collector and an expansion space connected with the circuit, the control means controlling the transport of the fluid between the expansion space and at least the part of the circuit comprising the collector, said expansion space being formed by a vessel which is divided by a movable member into two chambers, of which one is connected with the circuit.

Such a system has been disclosed in the German specification DE 25 42 348 laid open for public inspection.

The use of known anti-freeze agents e.g. glycol to protect the system against freezing has the disadvantage that these chemical additives may, in a short time, give rise to so-called pit-corrosion. This damage occurs particularly when the collector is made of aluminum. It will be apparent that thereby the life of the solar energy system is inadmissibly shortened.

In the system disclosed in said German specification the risk of the mentioned damage is nil and protection against too high or too low temperatures is obtained by reversion of the fluid flow and transport of the fluid contained in the collector to a second reservoir or expansion vessel which is positioned on the same or on a higher level than the collector. As a result this known system requires the use of a pump, which is able to carry, in a relatively short time, the fluid up to the required height and in this manner protection against interruption of the electric current cannot be obtained.

The invention has for its object to avoid the mentioned disadvantages of the known system and to that end provides a system in which the chamber which does not communicate with the circuit is optionally connectable to a source of fluid under pressure and a fluid discharge conduit, respectively, the chosen connection being determined by the temperature measured by the or each sensor, the expansion space being positioned on a lower level than the collector. Thereby an automatical discharge of the fluid is effected in case a too high or a too low temperature is imminent. Then the transport of fluid to the expansion space occurs by gravity.

The source of fluid under pressure may be the system of water mains. It is remarked, in this respect, that U.S. Patent Specification 2,838,043 describes a solar water-heating system, connected to a cold water inlet pipe 12, which serves the purpose of supplying cold water to be warmed up. The system according to this U.S. Patent Specification is different from the system according to the invention in that the expansion space is not present in the form of a material vessel which is divided by a movable member into two chambers.

Preferably the movable member is adapted to effect such a displacement of volume, as to enable the chamber which is connected with the circuit to take up the fluid from the circuit.

In order to facilitate a quick filling and discharge, the circuit may be connected with a fluid under atmospheric pressure through a valve acting on a pressure difference. The construction becomes very simple, when said fluid is atmospheric air. Should corrosive materials be used for the closed circuit it will be necessary to avoid contact with oxygen. In that case said fluid may be nitrogen.

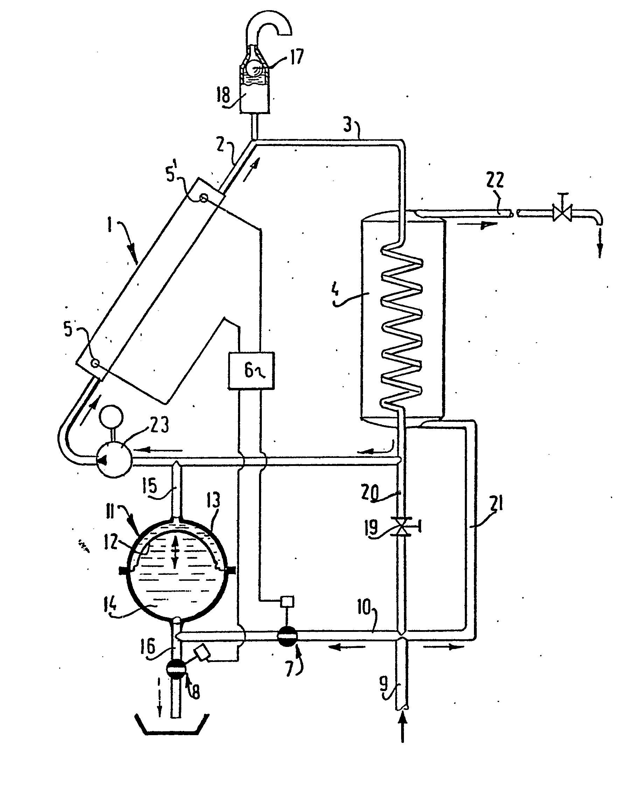

The invention will be further elucidated with the aid of the drawing of one embodiment thereof.

The drawing shows a diagrammatical view of a system for catching, accumulating and transferring solar energy, said system being provided with temperature protection and a protection against interruption of the supply of electric current.

The energy coming from the sun both as direct radiation and heat from the ambient air is caught by the solar energy collector 1 which forms part of the circuit 2, through which a fluid 3 flows. A part of the circuit is also a heat accumulator 4 which is adapted to transfer its heat to an energy consuming apparatus. By means of two temperature sensors 5, 5', of which one is provided near the fluid inlet and the other one near the fluid outlet of the solar energy collector, the temperature is measured in two places.

A valve 7 is provided in the supply conduit 10 of a reservoir 11 which is connected to the system of water mains 9 and is divided by an elastic diaphragm 12 into a first chamber 13 and a second chamber 14.

During normal operation the valve 7 is in its open condition, so that the pressure of the water mains forces the diaphragm 12 against the opening, with which a connecting conduit 15 extending between the circuit 2 and the reservoir 11 opens into the first chamber 13. This is possible, since a valve 8 provided in a discharge conduit 16 connected to the second chamber 14 of the reservoir 11 is, during normal operation, in its closed condition.

If the temperature measured by the temperature sensors falls below a predetermined value, say 5°C, or it rises to above a predetermined value, say 95°C, the electrical signal produced by at least one of the temperature sensors is passed on to a control device 6 controlling the valves 7 and 8 so, as to close valve 7 and to open valve 8.

In this way the second chamber 14 which is completely filled with tap water is emptied through discharge conduit 16 when there is danger of damaging the system by freezing or boiling of the fluid 3. Owing thereto the diaphragm 12 is forced down by the weight of the fluid 3 contained in the circuit, so that the first chamber 13 is filled with fluid and the entire system of the circuit is emptied.

As soon as the temperature measured by the temperature sensors has come back into the safe range the valve 8 is closed and the valve 7 is opened, so that the water pressure coming from the water mains 9 pushes the diaphragm 12 up and the fluid 3 contained in the first chamber 13 is forced back into the circuit 2.

The circuit 2 is connected with the atmosphere through a device 18 provided with a float 17 which is adapted to let air in and out during the discharge of fluid 3 from the circuit 2 to the first chamber 13 and during the flow of fluid back to the circuit, respectively.

The circuit 2 is connected to the water mains 9 by a supply conduit provided with a valve 19. During the filling of the circuit the water level rises till the float 17 closes the air opening of the device 18. The consumer's circuit for taking off hot water from the system consists of the heat accumulator 4 which is connected to the water mains 9 through a conduit 21 and to a conduit 22 for the supply of hot water to the water consuming apparatuses, such as washing machines, taps and the like.

The flow of the fluid 3 is stimulated by means of a pump 23 provided in the circuit.

In the drawing the direction of the fluid flow during normal operation has been indicated by arrows.

Safety means against overpressure and check valves to prevent the water from flowing back into the system of water mains have not been illustrated.

The system gives also protection against the event of the dropping out of the mains voltage. This protection is necessary since, when the pump 23 stops the flow of fluid is stopped or at least slowed down, owing to which the danger of extreme temperatures arises. As already has been said the valves 7 and 8 are open and closed, respectively, in normal operation, whereas they are closed and opened, respectively, by springs when the supply voltage drops out, so that the circuit 2 is emptied in the above described way.

The forces which are necessary to fill and to empty the circuit, when the safety function is brought into operation or becomes inoperative, are supplied by the pressure of the mains water and gravity, so that a great dependability is obtained.

## Claims

1. A solar energy system comprising a closed fluid circuit, a solar energy collector (1) forming part of the circuit (2), at least one temperature sensor (5, 5') which is connected with control means (6) and is provided in the collector (1) and an expansion space connected with the circuit, the control means (6) controlling the transport of the fluid between the expansion space and at least the part of the circuit (2) comprising the collector (1), said expansion space being formed by a vessel (11) which is divided by a movable member (12) into two chambers (13, 14), of which one is connected with the circuit, characterized in that the chamber (14) which does not communicate with the circuit (2) is optionally connectable to a source (9) of fluid under pressure and a fluid discharge conduit (16), respectively, the chosen connection being determined by the temperature measured by the or each sensor (5, 5'), the expansion space being positioned on a lower level than the collector.

2. A solar energy system according to claim 1, in which the source of fluid under pressure is the system of water mains.

3. A solar energy system according to claim 1 or 2, characterized in that the movable member is adapted to effect such a displacement of volume, as to enable the chamber which is connected with the circuit to take up the fluid from the circuit.

4. A solar energy system according to any one of the foregoing claims, characterized in that the circuit is connected with a fluid under atmospheric pressure through a valve acting on a pressure difference.

5. A solar energy system according to claim 4, characterized in that the fluid is the atmospheric air.

6. A solar energy system according to claim 4, characterized in that the fluid is nitrogen.

## Patentansprüche

1. Sonnenenergiesystem mit einem geschlossenen Mediumkreislauf, in dem ein mit mindestens einem mit Regelmitteln (6) verbundenen Temperaturfühler (5, 5') versehener Sonnenenergiekollektor (1) angeordnet ist, wobei mit dem Kreislauf ein Ausdehnungsraum verbunden ist und die Regelmittel (6) zur Verlagerung des Mediums zwischen mindestens den mit dem Kollektor (1) versehenen Teil des Kreislaufs (2) und den Ausdehnungsraum dient, welcher Ausdehnungsraum durch ein Gefäss (11) gebildet ist, das durch ein bewegliches Organ (12) in zwei Kammern (13, 14) unterteilt ist, von denen eine mit dem Kreislauf verbunden ist, dadurch gekennzeichnet, dass die nicht mit dem Kreislauf (2) verbundene Kammer (14) wahlweise mit einer Druckmediumquelle (9), bezw. einem Mediumabflusskanal (16) verbindbar ist, wobei die Wahl durch die durch den (die) Temperaturfühler (5, 5') gemessene Temperatur bestimmt wird, während der Ausdehnungsraum niedriger als der Kollektor liegt.

2. Sonnenenergiesystem nach Anspruch 1, dadurch gekennzeichnet, dass die Druckmediumquelle das Wasserleitungsnetz ist.

3. Sonnenenergiesystem nach Anspruch 1 oder 2, dadurch gekennzeichnet, dass das bewegliche Organ zum Ausführen eines derartigen Hubes ausgebildet ist, dass in der mit dem Kreislauf verbundenen Kammer das Medium aus dem Kreislauf aufgenommen werden kann.

4. Sonnenenergiesystem nach einem der vorhergehenden Ansprüche, dadurch gekennzeichnet, dass der Kreislauf über ein auf einen Druckunterschied ansprechendes Absperrorgan mit einem unter Atmosphärendruck stehenden Medium verbunden ist.

5. Sonnenenergiesystem nach Anspruch 4, dadurch gekennzeichnet, dass das Medium die Aussenluft ist.

6. Sonnenenergiesystem nach Anspruch 4, dadurch gekennzeichnet, dass das Medium Stickstoff ist.

## Revendications

1. Système d'énergie solaire comprenant un circuit fermé de circulation de fluide, un collecteur d'énergie solaire (1) faisant partie de ce circuit (2), au moins un détecteur de température (5, 5') relié à des moyens de commande (6) est monté dans le collecteur (1) et un espace de détente relié au circuit, les moyens de commande (6) contrôlant la circulation de fluide entre l'espace de détente et au moins la partie du circuit (2) comprenant le collecteur (1), cet espace de détente étant constitué par un récipient (11) divisé, par un élément mobile (12) en deux chambres (13, 14) dont l'une est reliée au circuit, système caractérisé en ce que le chambre (14) qui ne communique pas avec le circuit (2) peut se relier optionnellement et respectivement à une source (9) de fluide sous pression et à un conduit d'évacuation de fluide (16), la liaison choisie étant déterminée par la température mesurée par le ou les détecteurs (5, 5'), l'espace de détente se situant à un niveau plus bas que le lecteur.

2. Système d'énergie solaire selon la revendication 1, caractérisé en ce que la source de fluide sous pression, est la conduite d'eau du réseau.

3. Système d'énergie solaire selon l'une quelconque des revendications 1 et 2, caractérisé en ce que l'élément mobile permet d'effectuer un déplacement de volume tel que la chambre reliée au circuit puisse prendre en charge le fluide provenant de ce circuit.

4. Système d'énergie solaire selon l'une quelconque des revendications 1 à 3, caractérisé en ce que le circuit est relié à un fluide sous pression atmosphérique par l'intermédiaire d'une soupape mue par une différence de pression.

5. Système d'énergie solaire selon l'une quelconque des revendications 1 à 4, caractérisé en ce que le fluide est de l'air atmosphérique.

6. Système d'énergie solaire selon l'une quelconque des revendications 1 à 5, caractérisé en ce que le fluide est de l'azote.

0 000 803

1